# EUROPEAN PATENT APPLICATION

(11) **EP 2 584 234 A1**
(43) Date of publication of application: **24.04.2013**
(21) Application number: 11795365.3
(22) Date of filing: 02.06.2011
(51) Int. Cl.: F16K 31/42, F16K 31/06, H01M 8/04

(54) **ELECTROMAGNETIC ON-OFF VALVE**

(30) Priority: 15.06.2010 JP 2010135854
(71) Applicant: Kawasaki Jukogyo Kabushiki Kaisha, Kobe-shi, Hyogo 650-8670 (JP)
(72) Inventor: SUZUKI, Yutaka, Kobe-shi,Hyogo 651-2239 (JP); NOMICHI, kaoru, Kobe-shi,Hyogo 651-2239 (JP); NINOMIYA, Makoto, Kobe-shi,Hyogo 651-2239 (JP)
(74) Representative: Leinweber & Zimmermann
(86) International application number: PCT/JP2011/003121
(87) International publication number: WO 2011/158457

(57) **Abstract**

A main valve body 10 is provided in a housing 3 included in a solenoid on-off valve 1. A pilot passage 18 is formed on the main valve body 10, and a pilot valve body 11 is inserted into the pilot passage 18 so as to open and close the pilot passage 18. The pilot valve body 11 and the main valve body 10 move in accordance with the movement of a plunger 12 which is movable in an opening direction. The plunger 12 and the pilot valve body 11 are coupled to each other by a coupling pin 28 inserted through the plunger 12 and the pilot valve body 11. The coupling pin 28 is provided so as to be displaceable relative to the pilot valve body 11. When the main valve body 10 is pushed in the opening direction and before the coupling pin 28 contacts the pilot valve body 11, the plunger 12 stops the movement of the main valve body 10 relative to the plunger 12 in the opening direction. With this, it is possible to provide the solenoid on-off valve capable of preventing a shear force from acting on the coupling pin when the valve port is opened by pushing the main valve body.

## Description

### Technical Field

The present invention relates to a solenoid on-off valve capable of switching between the discharge and non-discharge of a gas from a tank by an electromagnetic solenoid and filling the tank with the gas.

### Background Art

A valve block is provided on an opening of a tank, and a discharging channel and filling channel, each of which connects the inside and outside of the tank, are formed on the valve block. The discharging channel is a channel through which a gas in the tank is discharged, and the filling channel is a channel through which the gas is filled in the tank. The valve block generally includes a solenoid on-off valve and a check valve. The solenoid on-off valve has a function of opening and closing the discharging channel in accordance with the existence or non-existence of a current flowing therethrough, and the check valve has a function of allowing the flow of the gas from the outside of the tank to the filling channel and blocking the opposite flow.

Since the valve block configured as above includes two systems that are a discharging system and a filling system, the overall size thereof becomes large. Therefore, it is preferable that one system perform both discharging and filling operations. To realize this, a valve having both the function of the solenoid on-off valve and the function of the check valve is required. Known as the valve having these two functions is a pilot solenoid valve described in, for example, PTL 1 or PTL 2.

The pilot solenoid valve (hereinafter simply referred to as "solenoid valve") described in each of PTLs 1 and 2 includes a housing on which a communication channel is formed. In the housing, a main valve body, a pilot valve body, and a plunger are included. The main valve body is seated on a main valve seat portion formed on the housing to close the communication channel. In addition, the main valve body includes an orifice hole connected to the communication channel, and the pilot valve body is inserted into the main valve body. The pilot valve body is seated on a pilot valve seat portion formed on the main valve body to close the orifice hole.

The plunger is coupled to the main valve body and the pilot valve body by a pilot pin penetrating the main valve body and the pilot valve body. The plunger moves by driving an electromagnetic solenoid provided on an outer periphery of the plunger. The pilot valve body and the main valve body move in accordance with the movement of the plunger by the pilot pin. The pilot valve body and the main valve body are separated from the respective seat portions in this order. To be specific, the orifice hole opens first, and the communication channel then opens. When the communication channel opens, a hydrogen gas is discharged from a hydrogen tank to be supplied to a fuel cell.

In the solenoid valve, the pilot valve body is being biased by a spring. When the electromagnetic solenoid is not operating, the pilot valve body is pressed against the pilot seat portion by a main valve spring to close the orifice hole. In addition, the main valve body is pressed against the main valve seat portion by the main valve spring through the pilot valve body to close the communication channel. With this, when the electromagnetic solenoid is not operating, the hydrogen gas is not discharged from the hydrogen tank. Meanwhile, when the hydrogen gas is supplied from the outside of the hydrogen tank to the communication channel to fill the hydrogen tank with the hydrogen gas, the main valve body is pushed up by the pressure of the hydrogen gas to separate from the main valve seat portion. Therefore, when the hydrogen gas is supplied to the communication channel, the main valve body is pushed up by the pressure of the hydrogen gas, the communication channel opens, and the hydrogen tank is filled with the hydrogen gas.

### Citation List

### Patent Literature

PTL 1: Japanese Laid-Open Patent Application Publication No. 2005-163896 PTL 2: Japanese Laid-Open Patent Application Publication No. 2009-210120

### Summary of Invention

### Technical Problem

According to the solenoid valve described in each of PTLs 1 and 2, through holes are respectively formed on the main valve body and the pilot valve body. By inserting the pilot pin fixed to the plunger through these through holes, these valve bodies and the plunger are coupled to one another. Center lines of these two through holes are positioned so as to be displaced from each other in a direction perpendicular to a direction in which the pin is inserted. When the electromagnetic solenoid is driven to cause the plunger to move in a suction direction, the pilot valve body is first pulled up in the suction direction, and the main valve body is then pulled up. To be specific, the orifice hole and the communication channel open at different times.

Meanwhile, when filling the hydrogen tank with the hydrogen gas, the main valve body is lifted up with the pilot valve body seated on the pilot seat portion. According to the solenoid valve described in PTL 1, when the pilot valve body contacts the pilot pin and is not lifted up any more, the pilot seat portion is sandwiched between the pilot valve body and the main valve body which is being lifted up by the pressure of the hydrogen gas, and receives from the pilot valve body a force corresponding to the pressing force. As a result, problems, such as the deterioration of the pilot seat portion, occur.

To solve such problems, according to the solenoid valve described in PTL 2, when the main valve body is pushed up, the main valve body contacts the pilot pin before the pilot valve body contacts the pilot pin, and the pilot valve body is pressed against the pilot seat portion by a pilot valve spring. With this, only a pressing force corresponding to a press force of the pilot valve spring is applied to the pilot seat portion. Thus, the pressing force that the pilot seat portion receives can be reduced. Therefore, the deterioration of the pilot seat portion of, for example, the solenoid valve described in PTL 1 can be reduced.

According to the solenoid valve described in PTL 2, the main valve body having been pushed up by the hydrogen gas contacts the pilot pin. The hydrogen gas supplied in the filling operation has high pressure. An internal pressure of the hydrogen tank is considerably low although it depends on the amount of hydrogen gas used. Therefore, a pressure difference between the inside and outside of the hydrogen tank is large, so that a pushed-up speed of the main valve body immediately after the start of the filling operation, that is, a pushed-up speed of the main valve body when the communication channel starts opening is considerably high. However, the plunger hardly moves and is maintained at an original position. Therefore, the main valve body collides with the pilot pin at a considerably high relative speed, and a strong impact shear force is applied to the pilot pin. Thus, the pilot pin may be damaged by the impact shear force. Even if the pilot pin has endured the impact shear force, the main valve body is being pressed against the pilot pin by the supplied hydrogen gas in the filling operation, so that a strong static shear force is being applied to the pilot pin supporting the main valve body. Also in the solenoid valve described in PTL 1, at the time of the start of the filling operation and during the filling operation, the pilot valve body seated on the main valve body contacts the pilot pin, so that the pilot pin may be damaged during the filling operation.

As above, since the strong impact shear force and the strong static shear force are applied to the pilot pin at the time of the start of the filling operation and during the filling operation, the strength of the pilot pin needs to be increased such that the pilot pin can endure these shear forces. However, if the outer diameter of the pilot pin is increased to improve the strength of the pilot valve body, the outer diameter of the solenoid valve becomes large. Therefore, it is preferable that the strong shear force be not applied to the pilot pin.

Here, an object of the present invention is to provide a solenoid on-off valve configured such that the shear force is not applied to the pilot pin (coupling pin) when the main valve body is pushed and the communication channel (valve port) opens to fill the tank with the gas.

### Solution to Problem

A solenoid on-off valve of the present invention includes: a housing including a tank space connected to a tank port, a supply and discharge space connected to a supply and discharge port, and a valve port connecting the tank space and the supply and discharge space; a main valve body configured to move between a valve port close position where the main valve body closes the valve port and a valve port open position where the main valve body opens the valve port and including a pilot passage connected to the tank space and the supply and discharge space; a pilot valve body configured to move between a passage close position where the pilot valve body is seated on the main valve body to close the pilot passage and a passage open position where the pilot valve body separates from the main valve body to open the pilot passage; a plunger configured to be movable in an opening direction and cause the pilot valve body and the main valve body to move to the passage open position and the valve port open position in this order when the plunger moves in the opening direction; an electromagnetic solenoid configured to generate an exciting force to cause the plunger to move in the opening direction; a plunger biasing unit configured to bias the plunger in a closing direction against the exciting force of the electromagnetic solenoid; and a coupling pin inserted through two members that are the plunger and the pilot valve body or two members that are the plunger and the main valve body and configured to be provided such that the two members are able to move in accordance with each other and are displaceable relative to each other, wherein when the main valve body is pushed in the opening direction, a movement of the main valve body relative to the plunger in the opening direction is stopped such that the coupling pin does not contact the two members.

According to the present invention, when the electromagnetic solenoid generates the exciting force, the plunger moves in the opening direction. With this, the pilot valve body first moves to the passage open position, and the pilot passage opens. Thus, the pressure in the supply and discharge space increases. Then, the pressure difference between the tank space and the supply and discharge space decreases, and a force necessary to cause the main valve body to move in the opening direction decreases. Therefore, even if the exciting force of the electromagnetic solenoid is small, the main valve body can be caused to move to the valve port open position in accordance with the movement of the plunger. When the main valve body moves to the valve port open position and the valve port opens, the tank space and the supply and discharge space are directly connected to each other. With this, the gas can be discharged. Moreover, when the gas is supplied to the supply and discharge space to fill the tank with the gas, the main valve body is caused to move in the opening direction by the gas. With this, the valve port opens, and the gas in the supply and discharge space can be introduced through the valve port, the tank space, and the tank port to the tank and filled in the tank. As above, a valve having an electromagnetic open-close function and a check valve function can be realized by the solenoid on-off valve of the present invention.

Moreover, in the present invention, when the main valve body is pushed by the gas to move in the opening direction, the coupling pin moves relative to one (opponent member) of the two members. By the movement of the coupling pin, the coupling pin is about to collide with the opponent member. However, before the coupling pin contacts the opponent member, the movement of the main valve body relative to the plunger in the opening direction is stopped. Therefore, the large shear force can be prevented from acting on the coupling pin as in conventional technologies by the collision of the coupling pin with the opponent member. Therefore, the breakage of the coupling pin can be prevented. Moreover, since the stiffness of the coupling pin can be reduced, the outer diameter of the coupling pin can be reduced.

In the above invention, it is preferable that: the coupling pin couple the plunger with the pilot valve body; the plunger be provided to be spaced apart from the main valve body in the open direction by a first clearance when the main valve body is located at the valve port close position; the pilot valve body include a plunger insertion hole; the coupling pin be fixed to the plunger, be inserted through the plunger insertion hole so as to be movable, and be provided to be spaced apart from a surface, which forms the plunger insertion hole, in the opening direction by a second clearance when the main valve body is located at the valve port close position; and the second clearance be larger than the first clearance.

According to the above configuration, the coupling pin is fixed to the plunger. Therefore, when the main valve body is pushed by the gas to move in the opening direction, the coupling pin moves relative to the main valve body in the closing direction in the plunger insertion hole. Since the plunger and the main valve body are spaced apart from each other only by the first clearance, the main valve body stops moving after it has moved relative to the plunger in the opening direction by the first clearance. Meanwhile, the coupling pin is spaced apart from the surface, which forms the insertion hole, in the opening direction by the second clearance and can move in the closing direction in the insertion hole by the second clearance that is larger than the first clearance. Therefore, even if the main valve body is pushed in the opening direction, the coupling pin does not contact the pilot valve body, and the shear force can be prevented from acting on the coupling pin during the filling operation.

In the above invention, it is preferable that: the pilot valve body and the main valve body be coupled to each other by the pilot pin so as to be movable in accordance with each other, the pilot pin being inserted through the pilot valve body and the main valve body; and the pilot pin be provided so as not to contact the pilot valve body or the main valve body when the main valve body is pushed in the opening direction.

According to the above configuration, even if the main valve body is pushed in the opening direction and the pilot pin moves relative to the pilot valve body or the main valve body (target member), the pilot pin does not contact the target member. Therefore, the large shear force can be prevented from acting on the pilot pin by the contact of the pilot pin with the target member. On this account, the breakage of the pilot pin can be prevented. Moreover, since the stiffness of the pilot pin can be reduced, the outer diameter of the pilot pin can be reduced.

In the above invention, it is preferable that: the pilot valve body include a valve main body which is inserted into the main valve body so as to be movable and a pilot valve seat portion which is provided on the valve main body and is seated on the main valve body to close the pilot passage; the pilot valve main body be accommodated so as to be spaced apart from the main valve body in the opening direction by a third clearance; the coupling pin be provided to be spaced apart from the surface, which forms the plunger insertion hole, in the closing direction by a fourth clearance when the pilot valve main body is located at the passage close position; the pilot valve main body further include a main valve insertion hole; the pilot pin be fixed to the main valve body, be inserted through the main valve insertion hole so as to be movable, and be provided to be spaced apart from a surface, which forms the main valve insertion hole, in the closing direction by a fifth clearance when the pilot valve body is located at the passage close position; and each of the fourth clearance and the fifth clearance be larger than the third clearance.

According to the above configuration, in a case where the pilot valve main body moves down toward the main valve body by, for example, the plastic deformation of the pilot valve seat portion, the pilot valve main body contacts the main valve body before it contacts the coupling pin or the pilot pin. Thus, the pilot valve main body does not move down by the third clearance or more. Therefore, the pilot valve body can be prevented from separating from the main valve body without being seated on the main valve body by the contact of the pilot valve body with the coupling pin or the pilot pin. With this, the leakage from the pilot passage can be prevented.

In the above invention, it is preferable that: the coupling pin couple the plunger with the main valve body; the plunger be provided to be spaced apart from the main valve body by a sixth clearance when the main valve body is located at the valve port close position; the plunger include an insertion hole; the coupling pin be fixed to the main valve body, be inserted through the insertion hole so as to be movable, and be provided to be spaced apart from a surface, which forms the insertion hole, in the closing direction by a seventh clearance when the main valve body is located at the valve port close position; and the seventh clearance be larger than the sixth clearance.

According to the above configuration, the coupling pin is fixed to the main valve body. Therefore, when the main valve body is pushed by the gas to move in the opening direction, the coupling pin moves relative to the main valve body in the opening direction in the insertion hole. Since the plunger and the main valve body are spaced apart from each other only by the sixth clearance, the main valve body stops moving after it has moved relative to the plunger in the opening direction by the sixth clearance. Meanwhile, the coupling pin is spaced apart from the surface, which forms the insertion hole, in the opening direction by the seventh clearance or more and can move in the closing direction in the insertion hole by the seventh clearance that is larger than the sixth clearance. Therefore, even if the main valve body is pushed in the opening direction, the main valve body contacts the plunger before the coupling pin contacts the plunger. With this, the coupling pin does not contact the plunger, and the shear force can be prevented from acting on the coupling pin during the filling operation.

In the above invention, it is preferable that: the plunger include a plunger main body and a cover member; the plunger main body include an attachment portion located in the opening direction; a cover member threadedly engage with the attachment portion; a valve space closed by the attachment portion be formed in the cover member; and the pilot valve body contact and be supported by the cover member in the valve space and be provided so as to be movable from a state where the pilot valve body contacts and is supported by the cover member.

According to the above configuration, the pilot valve body can be caused to move in accordance with the plunger without the pin. With this, the number of members which may be damaged can be reduced, and the reliability can be further improved.

In the above invention, it is preferable that: the pilot valve body be provided to be spaced apart from an end surface of the attachment portion by an eighth clearance when the pilot valve body is located at the passage close position; and the eighth clearance be larger than the sixth clearance.

According to the above configuration, even if the valve body is pushed by the gas to move in the opening direction, the pilot valve body does not contact the attachment portion of the plunger main body. Therefore, the pilot valve body and the plunger can be prevented from being damaged.

In the above invention, it is preferable that the solenoid on-off valve further include a valve body biasing unit configured to bias the pilot valve body toward the close position.

According to the above configuration, when the main valve body is pushed, the pilot valve body which is seated on the main valve body is pushed by the main valve body. However, this pressing force can be absorbed by the valve body biasing unit. With this, the deformation and breakage of the pilot valve body can be prevented, and the gas leakage due to the deformation, breakage, or the like can be prevented.

### Advantageous Effects of Invention

The present invention can provide the solenoid on-off valve capable of preventing the shear force from acting on the coupling pin when the main valve body is pushed to open the valve port.

### Brief Description of Drawings

[Fig. 1] Fig. 1 is a cross-sectional view showing a solenoid on-off valve according to Embodiment 1 of the present invention.
[Fig. 2] Fig. 2 is an enlarged cross-sectional view showing the vicinity (region X1) of a main valve body of the solenoid on-off valve shown in Fig. 1.
[Fig. 3] Fig. 3 is an enlarged cross-sectional view showing a state where the solenoid on-off valve shown in Fig. 2 is in an open state.
[Fig. 4] Fig. 4 is an enlarged cross-sectional view showing a state where the solenoid on-off valve shown in Fig. 2 is in a filling state.
[Fig. 5] Fig. 5 is an enlarged cross-sectional view showing a state where the solenoid on-off valve shown in Fig. 2 is manually opened.

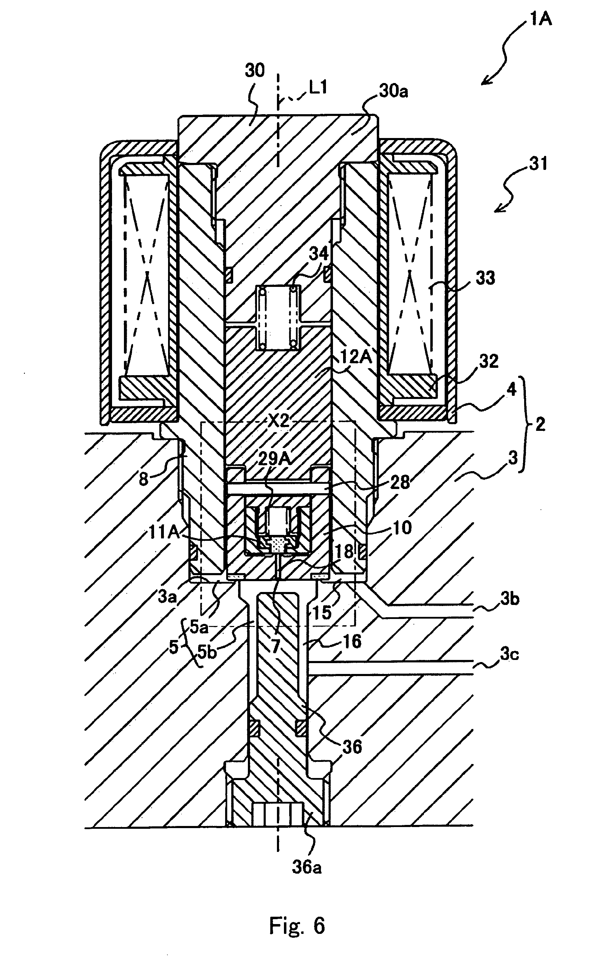

[Fig. 6] Fig. 6 is a cross-sectional view showing the solenoid on-off valve according to Embodiment 2 of the present invention.
[Fig. 7] Fig. 7 is an enlarged cross-sectional view showing the vicinity (region X2) of the main valve body of the solenoid on-off valve shown in Fig. 6.
[Fig. 8] Fig. 8 is an enlarged cross-sectional view showing a state where the solenoid on-off valve shown in Fig. 7 is in the open state.
[Fig. 9] Fig. 9 is an enlarged cross-sectional view showing a state where the solenoid on-off valve shown in Fig. 7 is in the filling state.
[Fig. 10] Fig. 10 is an enlarged cross-sectional view showing a state where the solenoid on-off valve shown in Fig. 7 is manually opened.

### Description of Embodiments

Hereinafter, solenoid on-off valves 1 and 1A according to Embodiments 1 and 2 of the present invention will be explained in reference to the above-described drawings. A concept of directions, such as upper, lower, left, right, front, and rear directions, in the embodiments is used for convenience of explanation and does not suggest that the arrangements, directions, and the like of components of the solenoid on-off valves 1 and 1A are limited to such directions. Each of the solenoid on-off valves 1 and 1A explained below is just one embodiment of the present invention, and the present invention is not limited to the embodiments. Additions, eliminations, and modifications may be made within the spirit of the present invention.

### Embodiment 1

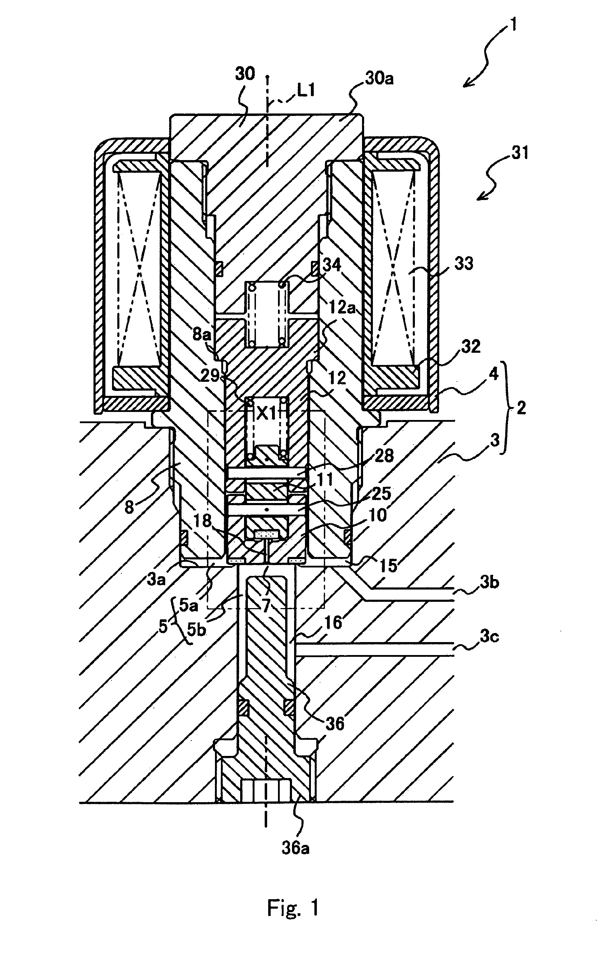

A solenoid on-off valve 1 according to Embodiment 1 of the present invention is provided at a high-pressure tank (not shown) configured to store a gas to be supplied to a gas consuming unit, such as a natural gas engine or a fuel cell. The solenoid on-off valve 1 is formed integrally with a valve block (not shown) on which a supply and discharge passage connecting the high-pressure tank and the gas consuming unit is formed. The solenoid on-off valve 1 is provided on an opening of the high-pressure tank together with the valve block to close the opening. The solenoid on-off valve 1 is configured to be able to control the discharge of the gas in the high-pressure tank and fill the high-pressure tank with the gas. Hereinafter, the configuration of the solenoid on-off valve 1 will be explained in reference to Figs. 1 to 5.

### Configuration of Solenoid On-off Valve

The solenoid on-off valve 1 includes a housing 2. The housing 2 includes a housing main body 3 formed integrally with the valve block and a solenoid case 4 configured to accommodate a below-described electromagnetic solenoid 31. The housing main body 3 includes a through hole 5 extending along an axis line L1 extending in an upper-lower direction. Both upper and lower ends of the through hole 5 are open, and a valve chest 5a that is an upper region of the through hole 5 is larger in diameter than a supply and discharge passage 5b that is a lower region of the through hole 5. A main valve seat 6 is formed on a periphery of an opening of the supply and discharge passage 5b, the opening facing the valve chest 5a. The main valve seat 6 is an annular protruding portion projecting in an upper direction, and a circular valve port 7 is formed on an inner side of a tip end of the main valve seat 6. A guide member 8 is inserted into the valve chest 5a through an upper opening thereof.

The guide member 8 is a substantially cylindrical member. The guide member 8 threadedly engages with an inner peripheral surface of the housing main body 3 in a state where a lower portion thereof is inserted into the valve chest 5a. A seal between the inner peripheral surface of the housing main body 3 and an outer peripheral surface of the guide member 8 is being achieved. Moreover, a lower end of the guide member 8 faces an outer peripheral edge 3a located on an outer side of the main valve seat 6 and is spaced apart from the outer peripheral edge 3a in an upper direction. A main valve body 10, a pilot valve body 11, and a plunger 12 are inserted through the guide member 8.

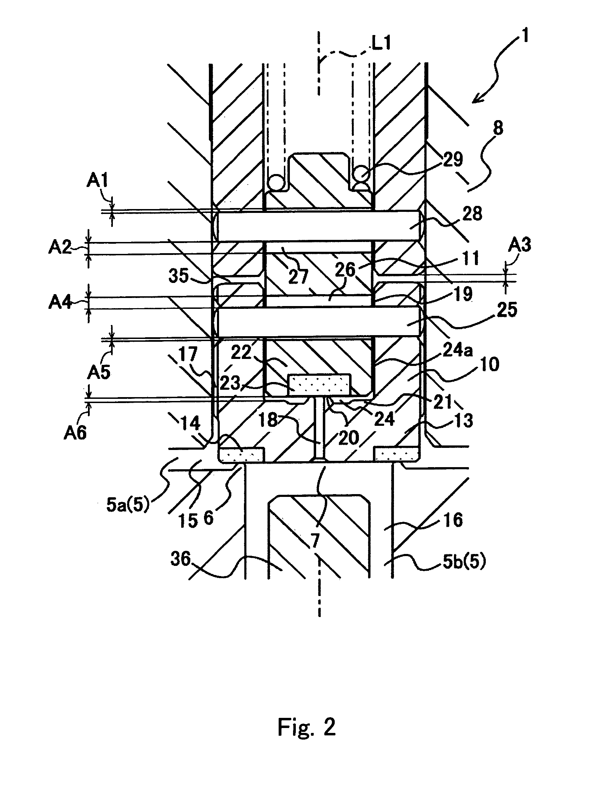

As shown in Fig. 2, the main valve body 10 includes a main valve main body 13 and a main valve seat portion 14. The main valve main body 13 is a substantially bottomed cylindrical member. The main valve main body 13 is inserted through the guide member 8 such that an opening thereof faces upward. The main valve main body 13 is slidable in the guide member 8 in the upper-lower direction. The main valve seat portion 14 is provided at a lower end of the main valve main body 13. The main valve seat portion 14 is an annular member made of synthetic rubber, synthetic resin, or the like. A lower surface of the main valve seat portion 14 is exposed in a lower direction. The main valve seat portion 14 is provided such that the exposed lower surface thereof faces the main valve seat 6. When the main valve body 10 is located at a valve port close position as shown in Figs. 1 and 2, the main valve seat portion 14 is seated on the main valve seat 6 to close the valve port 7.

A tank space 15 is formed on a radially outer side of the main valve seat 6 on which the main valve seat portion 14 is seated as above. The tank space 15 is an annular space surrounded by the main valve body 10, the guide member 8, the housing main body 3, and the main valve seat 6. The tank space 15 is connected through the valve port 7 to the supply and discharge passage 5b located on a radially inner side of the main valve seat 6. Moreover, a tank port 3b connected to the high-pressure tank (not shown) and a supply and discharge port 3c connected to a device (for example, a gas consuming unit or a filling device) located outside the high-pressure tank are formed on the housing main body 3. The tank space 15 is connected to the tank port 3b, and the supply and discharge passage 5b is connected to the supply and discharge port 3c. As above, the tank port 3b, the tank space 15, the valve port 7, the supply and discharge passage 5b, and the supply and discharge port 3c constitute a valve passage 16 connecting the inside and outside of the high-pressure tank. When the main valve body 10 is seated on the main valve seat 6 to close the valve port 7, the communication between the tank space 15 and the supply and discharge passage 5b is blocked, that is, the valve passage 16 is blocked.

A plurality of communication grooves 17 and a pilot passage 18 are formed on the main valve main body 13. The communication grooves 17 are grooves extending in the upper-lower direction and are formed on an outer peripheral surface of the main valve body 10. Both upper and lower ends of the communication grooves 17 are open, so that the communication grooves 17 connect a space (to be specific, a below-described communication space 35) located above the main valve body 10 and the tank space 15. The pilot passage 18 is a through hole extending in the upper-lower direction along an axis of the main valve body 10 (in the present embodiment, the axis of the main valve body 10 substantially coincides with the axis line L1). The pilot passage 18 is formed on a bottom portion of the main valve main body 13 so as to penetrate the bottom portion. Therefore, a lower opening of the pilot passage 18 faces the valve port 7 and connects the supply and discharge passage 5b and a valve internal space 19 that is a space in the main valve main body 13.

Moreover, a pilot valve seat 20 is formed on a periphery of an upper opening (to be specific, an opening facing the valve internal space 19) of the pilot passage 18. The pilot valve seat 20 is a protruding portion protruding in the upper direction and has a substantially annular shape. A stopper portion 21 is formed around the pilot valve seat 20. The stopper portion 21 is an annular step portion raised upward. The stopper portion 21 is formed along the entire periphery of an inner peripheral surface of the main valve body 10 in a circumferential direction. The stopper portion 21 is formed to be spaced apart from the pilot valve seat 20 in a radially outer direction, and the height thereof is lower than that of the pilot valve seat 20. The pilot valve body 11 is inserted into the valve internal space 19 so as to face the pilot valve seat 20 and the stopper portion 21.

The pilot valve body 11 includes a valve main body 22 and a pilot valve seat portion 23. The valve main body 22 is formed in a substantially columnar shape and is inserted into the valve internal space 19. The valve main body 22 is slidable in the main valve body 10 in the upper-lower direction. The pilot valve seat portion 23 is provided at a lower end portion of the valve main body 22. The pilot valve seat portion 23 is a disc-shaped member made of synthetic rubber, synthetic resin, or the like. A lower surface of the pilot valve seat portion 23 is exposed in the lower direction. The pilot valve seat portion 23 is provided such that the lower surface thereof faces the pilot valve seat 20. When the pilot valve body 11 is located at a passage close position as shown in Figs. 1 and 2, the pilot valve seat portion 23 is seated on the pilot valve seat 20 to close the pilot passage 18.

A space is formed between a lower end of the valve main body 22 configured as above and the bottom portion of the main valve main body 13, and this space is a pilot chamber 24. The pilot chamber 24 is a substantially annular space surrounded by the valve main body 22, the main valve main body 13, and the pilot valve seat 20 and is located on the radially outer side of the pilot valve seat 20. When the pilot valve seat 20 opens, the pilot chamber 24 is connected to the supply and discharge passage 5b through the pilot passage 18 and also connected to the space (to be specific, the below-described communication space 35) located above the main valve body 10 through a gap 24a located between an outer peripheral surface of the pilot valve body 11 and the inner peripheral surface of the main valve body 10.

The pilot valve body 11 and the main valve body 10 configured as above are coupled to each other by a pilot pin 25, and the main valve body 10 moves in accordance with the movement of the pilot valve body 11. Specifically, the pilot pin 25 is a substantially columnar pin member and is inserted through the main valve body 10 and the pilot valve body 11. The pilot pin 25 extends in a radial direction of the main valve main body 13. Both end portions of the pilot pin 25 are fittingly inserted into and fixed to an upper end portion of the main valve main body 13, and a middle portion thereof is inserted through a first insertion hole 26 formed on the pilot valve body 11. The first insertion hole 26 that is a main valve insertion hole penetrates the valve main body 22 in the radial direction. A diameter of the first insertion hole 26 is larger than an outer diameter of the pilot pin 25. Moreover, a second insertion hole 27 is formed on the valve main body 22 so as to be located above the first insertion hole 26.

The second insertion hole 27 that is a plunger insertion hole is a hole penetrating the valve main body 22 in the radial direction. A coupling pin 28 is inserted through the second insertion hole 27. The coupling pin 28 is a substantially columnar pin member. A diameter of the coupling pin 28 is smaller than an inner diameter of the second insertion hole 27. Both end portions of the coupling pin 28 project in the radially outer direction from the second insertion hole 27 and are fittingly inserted into and fixed to the plunger 12.

The plunger 12 is made of a magnetic material and has a substantially bottomed cylindrical shape. The plunger 12 is inserted through the guide member 8 such that an opening thereof faces downward. The plunger 12 is positioned such that a lower end thereof faces an upper end of the main valve body 10 (to be specific, an upper end of the main valve main body 13). The upper end portion of the pilot valve body 11 is inserted into the opening of the plunger 12. The coupling pin 28 penetrates the plunger 12 and the pilot valve body 11 in the radial direction. Both end portions of the coupling pin 28 are fixed to a lower end portion of the plunger 12. With this, the plunger 12 and the pilot valve body 11 are coupled to each other such that the pilot valve body 11 moves in accordance with the movement of the plunger 12.

As shown in Fig. 1, the plunger 12 includes a flange 12a at an upper end portion thereof. The flange 12a is formed along the entire periphery in the circumferential direction and projects in the radially outer direction. An inner diameter of an upper end portion of the guide member 8 is set so as to correspond to an outer diameter of the flange 12a, and an inner diameter of a lower end portion of the guide member 8 is smaller than that of the upper end portion thereof. Therefore, a step portion 8a is formed on an inner peripheral surface of the guide member 8 so as to be located between an upper end region and lower end region of the inner peripheral surface of the guide member 8. The flange 12a is supported by the step portion 8a. When the main valve body 10 is located at the valve port close position, the plunger 12 supported as above is spaced apart from the main valve body 10 in the upper-lower direction.

As shown in Fig. 2, a first spring 29 (valve body biasing unit) is accommodated in the plunger 12. The first spring 29 is a so-called compression coil spring. The first spring 29 is provided between an upper end of the pilot valve body 11 and a ceiling surface of the plunger 12 so as to be compressed. The first spring 29 biases the valve main body 22 in the lower direction and presses the pilot valve seat portion 23 against the pilot valve seat 20. To be specific, the first spring 29 biases the pilot valve body 11 in a closing direction and presses the pilot valve body 11 against the pilot valve seat 20 to cause the pilot valve body 11 to be seated on the pilot valve seat 20.

The pilot pin 25 is provided in the first insertion hole 26 to be spaced apart from a lower inner peripheral surface of the pilot valve body 11 such that the pilot pin 25 does not contact the pilot valve body 11 which is seated as above. Similarly, the coupling pin 28 is provided in the second insertion hole 27 to be spaced apart from an upper inner peripheral surface of the pilot valve body 11 such that the coupling pin 28 does not contact the pilot valve body 11 which is seated on the pilot valve seat 20 in a state where the plunger 12 is supported by the step portion 8a of the guide member 8. When the plunger 12 is lifted in the upper direction, the coupling pin 28 contacts the inner peripheral surface of the pilot valve body 11 to lift up the pilot valve body 11.

Further, when the pilot valve body 11 is lifted up, the pilot pin 25 contacts the inner peripheral surface of the pilot valve body 11 to lift up the main valve body 10 to a valve port open position, separate the main valve body 10 from the main valve seat 6, and open the valve port 7. As above, when the plunger 12 is lifted up, the main valve body 10 and the pilot valve body 11 are lifted up in order of the pilot valve body 11 and the main valve body 10. As shown in Fig. 1, a fixed magnetic pole 30 is provided above the plunger 12 configured as above.

The fixed magnetic pole 30 is a substantially columnar member made of a ferromagnetic material and is being inserted into an upper opening of the guide member 8. The fixed magnetic pole 30 threadedly engages with the guide member 8 in a state where a seal between an outer peripheral surface of the fixed magnetic pole 30 and the guide member 8 is being achieved. A lower end of the fixed magnetic pole 30 faces an upper end of the plunger 12. A flange portion 30a projecting in the radially outer direction is formed along the entire periphery of an upper end portion of the fixed magnetic pole 30 in the circumferential direction. By causing the flange portion 30a to contact an upper end of the guide member 8, the fixed magnetic pole 30 is positioned and an upper opening of the guide member 8 is closed. The electromagnetic solenoid 31 is externally provided on an outer peripheral portion of the guide member 8 whose upper opening is closed as above.

The electromagnetic solenoid 31 is located on an outer side of the housing main body 3 (to be specific, on an upper side of the housing main body 3) and is accommodated in the solenoid case 4. The electromagnetic solenoid 31 includes a bobbin 32 and a coil wire 33. The bobbin 32 is formed in a substantially cylindrical shape and is externally provided on the guide member 8. The coil wire 33 winds around an outer peripheral surface of the bobbin 32. A controller, not shown, is electrically connected to the coil wire 33. By supplying a current from the controller to the coil wire 33, the coil wire 33 is excited to magnetize the plunger 12. By magnetizing the plunger 12 as above, the plunger 12 is adsorbed by the fixed magnetic pole 30 to be lifted in the upper direction. That is, the electromagnetic solenoid 31 can generate an exciting force by supplying the current thereto and thus can cause the plunger 12 to move in the upper direction.

A second spring 34 (plunger biasing unit) is provided in the guide member 8. The second spring 34 is a so-called compression coil spring. The second spring 34 is provided between the plunger 12 and the fixed magnetic pole 30 so as to be compressed. The second spring 34 biases the plunger 12 in a direction against the exciting force of the electromagnetic solenoid 31, that is, in the lower direction. Since the plunger 12 is biased by the second spring 34, the plunger 12 is pressed in the lower direction to be seated on the step portion 8a of the guide member 8.

In the solenoid on-off valve 1 configured as above, a relative positional relation between the coupling pin 28 and the valve main body 22, a relative positional relation between the plunger 12 and the main valve body 10, a relative positional relation between the pilot pin 25 and the valve main body 22, and a relative positional relation between the pilot valve body 11 and the stopper portion 21 when the main valve body 10 and the pilot valve body 11 are respectively located at the valve port close position and the passage close position are preset. Hereinafter, these relative positional relations will be explained in reference to Fig. 2.

The coupling pin 28 is provided in the second insertion hole 27 so as to be spaced apart from the inner peripheral surface (hereinafter simply referred to as "upper inner peripheral surface"), which forms the second insertion hole 27, by a gap A1 (fourth clearance) located above the coupling pin 28 and a gap A2 (second clearance) located below the coupling pin 28. Each of the gaps A1 and A2 denotes the size of an interval in the upper-lower direction, and the same is true for below-described gaps A3 to A6. The plunger 12 and the main valve body 10 are provided so as to be spaced apart from each other by a gap A3 (first clearance) in the upper-lower direction. Thus, a relative movement distance of the main valve body 10 with respect to the plunger 12 in an opening direction is limited so as not to be equal to or more than the gap A3. The communication space 35 having an annular shape is formed between the plunger 12 and the main valve body 10. By the communication space 35, the communication groove 17 and the gap 24a are connected to each other, and the tank space 15 and the pilot chamber 24 are further connected to each other. The pilot pin 25 is provided in the first insertion hole 26 so as to be spaced apart from the inner peripheral surface (hereinafter simply referred to as "lower inner peripheral surface"), which forms the first insertion hole 26, by a gap A4 (fifth clearance) located above the pilot pin 25 and a gap A5 located below the pilot pin 25. The pilot valve body 11 and the main valve body 10 are provided so as to be spaced apart from each other by a gap A6 (third clearance).

Regarding relations among respective gaps defined as above, each of the gaps A1 and A4 is larger than the gap A6 (to be specific, A1>A6, A4>A6), and the gap A2 is larger than the gap A3. It is preferable that the gaps A1 and A5 be as large as possible such that the pilot pin 25 and the coupling pin 28 do not contact the valve main body 22 when, for example, the pilot valve body 11 vibrates. If the gaps A1 and A5 are increased without changing the stroke of the plunger 12, the opening (clearance between the main valve body 10 and the main valve 6) of the main valve 6 decreases. Therefore, the opening of the main valve 6 needs to be increased as much as possible while securing a minimum necessary opening of the main valve 6.

The solenoid on-off valve 1 configured as above is a so-called normally closed on-off valve. When the current is not supplied to the electromagnetic solenoid 31, the main valve body 10 is located at the valve port close position, and the pilot valve body 11 is located at the passage close position. With this, the valve port 7 and the pilot passage 18 are closed, the communication between the tank port 3b and the supply and discharge port 3c is blocked, and the solenoid on-off valve 1 is in a closed state (see Fig. 2).

The solenoid on-off valve 1 includes a manual operation rod 36. The manual operation rod 36 has a substantially columnar shape and is being inserted through the supply and discharge passage 5b. The manual operation rod 36 includes a head portion 36a at a base end portion thereof. The head portion 36a is larger in diameter than the other portion of the manual operation rod 36. The supply and discharge passage 5b in the vicinity of a lower opening is larger in diameter than the other portion thereof so as to correspond to the shape of the manual operation rod 36. The head portion 36a of the manual operation rod 36 threadedly engages with the supply and discharge passage 5b in the vicinity of the lower opening. A hexagonal hole, which opens in the lower direction, is formed on the head portion 36a of the manual operation rod 36. By tightening the manual operation rod 36 with a tightening tool, such as a hexagonal wrench, the manual operation rod 36 can be moved in the upper-lower direction.

Moreover, a seal between an outer peripheral surface of a middle portion of the manual operation rod 36 and the inner peripheral surface of the housing main body 3 is achieved. Thus, the gas in the supply and discharge passage 5b does not leak to the outside. A tip end (upper end) of the manual operation rod 36 is located in the vicinity of the lower end of the main valve body 10. By turning the manual operation rod 36 with the tightening tool, the manual operation rod 36 contacts the main valve body 10. Then, by further turning the manual operation rod 36, the manual operation rod 36 presses the main valve body 10 in the opening direction. Thus, the main valve body 10 is pushed up from the main valve seat 6.

### Opening Operation of Solenoid On-off Valve

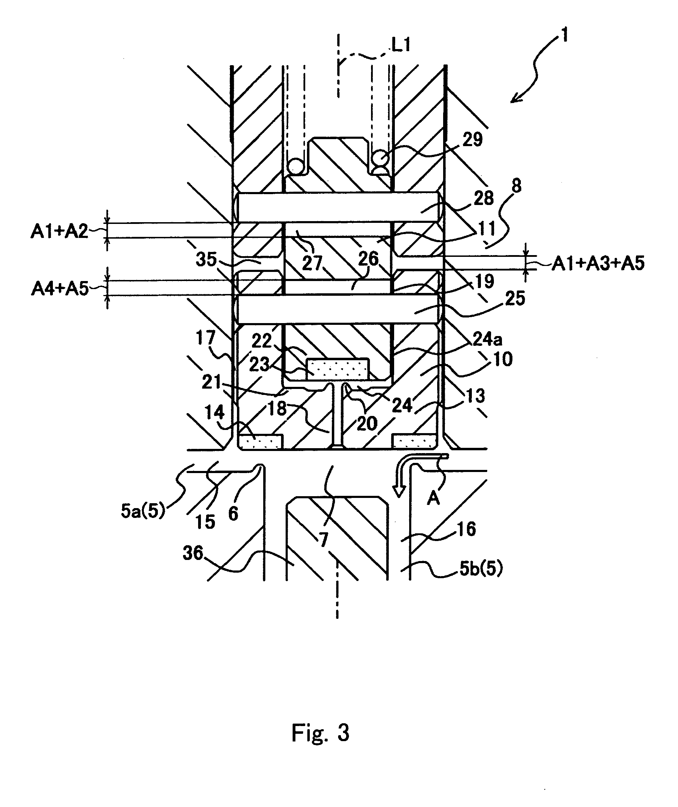

Hereinafter, a case of opening the solenoid on-off valve 1 that is in the open state will be explained in reference to Fig. 3. When the current is supplied to the electromagnetic solenoid 31, the coil wire 33 is excited to generate the exciting force, and the plunger 12 is then suctioned toward the fixed magnetic pole 30. Thus, the plunger 12 moves in the opening direction. When the plunger 12 moves in the opening direction by the distance A1, the coupling pin 28 contacts the upper inner peripheral surface of the pilot valve body 11. When the plunger 12 is further moved in the opening direction, the pilot valve body 11 is lifted up in the opening direction via the coupling pin 28. Meanwhile, since the lower inner peripheral surface of the pilot valve body 11 and the pilot pin 25 are spaced apart from each other by the gap A5, the main valve body 10 remains at the valve port close position. Therefore, the pilot valve body 11 moves relative to the main valve body 10 in the opening direction and separates from the pilot valve seat 20 (passage open position). Thus, the pilot passage 18 opens.

When the pilot passage 18 opens, the tank space 15 and the supply and discharge passage 5b are connected to each other through the communication groove 17, the communication space 35, the gap 24a, the pilot chamber 24, and the pilot passage 18. By this connection, the gas in the high-pressure tank is supplied through the tank port 3b to the supply and discharge passage 5b. Thus, the internal pressure of the supply and discharge passage 5b increases. Therefore, the pressure difference between the tank space 15 and the supply and discharge passage 5b decreases, and an acting force necessary to cause the main valve body 10 to move in the opening direction decreases. By adopting such a method, the valve can be opened even if the exciting force applied to the plunger 12 is small. Thus, the electromagnetic solenoid 31 can be reduced in size.

When the supply of the current to the electromagnetic solenoid 31 is continued even after the pilot passage 18 is opened, the plunger 12 is continued to be lifted up. Then, the lower inner peripheral surface of the pilot valve body 11 contacts the pilot pin 25, and the pilot pin 25 is lifted up by the pilot valve body 11. With this, the main valve body 10 moves in the opening direction and separates from the main valve seat 6 (valve port open position). Thus, the valve port 7 opens. When the valve port 7 opens, the tank space 15 and the supply and discharge passage 5b are directly connected to each other through the valve port 7, and the gas in the high-pressure tank is directly supplied from the tank space 15 to the supply and discharge passage 5b (see an arrow A in Fig. 3). With this, the gas in the high-pressure tank can be discharged through the supply and discharge port 3c to be supplied to, for example, the gas consuming unit. At this time, the gap between the plunger 12 and the main valve body 10 is equal to the sum of the gaps A1, A3, and A5, that is, is further larger than the gap A3 that is the gap when the valve is closed.

### Closing Operation of Solenoid On-off Valve

When the supply of the current to the electromagnetic solenoid 31 is stopped in the open state, the exciting force disappears, and the plunger 12 moves in the lower direction (closing direction) by the biasing force of the second spring 34. With this, the pilot valve body 11, which is being biased by the first spring 29, also moves in the closing direction. Then, the pilot valve body 11 is seated on the pilot valve seat 20 to close the pilot passage 18. After the pilot valve body 11 is seated on the pilot valve seat 20, the pilot valve body 11 presses the main valve body 10 in the closing direction. Therefore, the main valve body 10 also moves in the closing direction together with the plunger 12 and the pilot valve body 11. Then, the main valve body 10 is seated on the main valve seat 6 to close the valve port 7, and the plunger 12 is supported by the step portion 8a. Thus, the solenoid on-off valve 1 is set to the closed state (see Fig. 2).

### Filling Operation of Solenoid On-off Valve

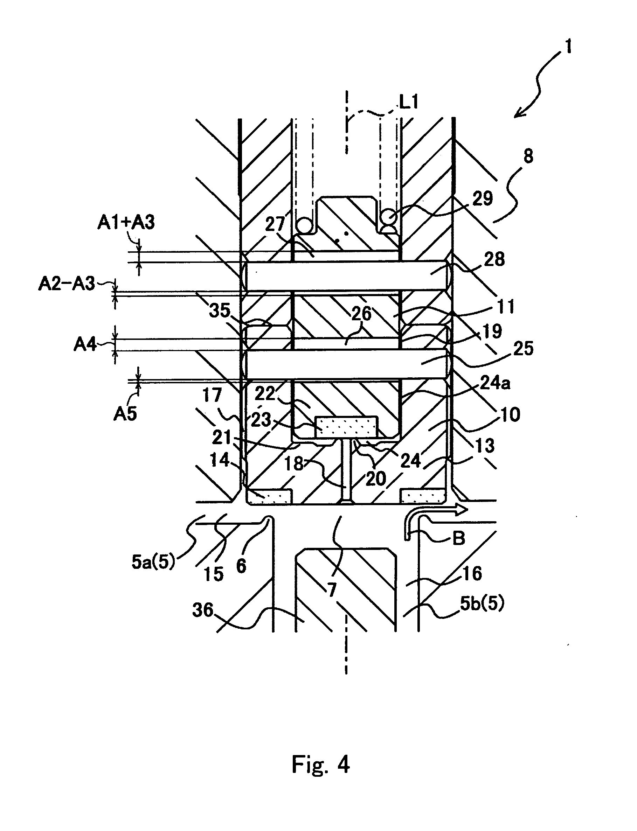

Next, a case of filling the high-pressure tank with the gas will be explained in reference to Fig. 4. When filling the high-pressure tank with the gas, the gas to be filled (hereinafter simply referred to as "fill gas") is supplied through the supply and discharge port 3c to the supply and discharge passage 5b. Then, the main valve body 10 receives the acting force of the fill gas in the opening direction to move in the opening direction and separate from the main valve seat 6. With this, the valve port 7 opens, and the fill gas in the supply and discharge passage 5b is introduced through the valve port 7, the tank space 15, and the tank port 3b to the high-pressure tank (see an arrow B in Fig. 4). Thus, the high-pressure tank is filled with the gas.

Meanwhile, even after the valve port 7 opens, the main valve body 10 moves in the opening direction by the acting force of the fill gas. At this time, the pilot valve body 11 receives the acting force of the fill gas flowing through the pilot passage 18 to be slightly lifted up from the pilot valve seat 20. However, a pressure receiving area of the main valve body 10 is larger than that of the pilot valve body 11, the pressure receiving area being an area which receives the acting force of the fill gas. Therefore, the pilot valve body 11 is maintained so as to be mostly in close contact with the pilot valve seat 20. The main valve body 10 and the pilot valve body 11 move integrally in a state where they are in close contact with each other. Therefore, even when the main valve body 10 is lifted up, the relative positional relation between the pilot pin 25 and the lower inner peripheral surface of the pilot valve body 11 changes little. To be specific, the pilot pin 25 is spaced apart from the lower inner peripheral surface by the gap A4 located above the pilot pin 25 and the gap A5 located below the pilot pin 25, and the pilot pin 25 and the lower inner peripheral surface do not contact each other. Therefore, the pilot pin 25 can be prevented from breaking by contacting with the lower inner peripheral surface of the pilot valve body 11 during the filling operation.

Moreover, since the pilot valve body 11 is being biased by the first spring 29, the first spring 29 can absorb a force of the main valve body 10 pressing the pilot valve body 11. To be specific, a force of the pilot valve seat 20 pressing the pilot valve seat portion 23 can be suppressed. Thus, the gas leakage in the closed state can be prevented from occurring by largely deforming or damaging the pilot valve seat portion 23 by the filling operation of the gas. With this, the solenoid on-off valve 1 having higher reliability can be provided.

Further, when the main valve body 10 moves relative to the plunger 12 in the opening direction by the gap A3 (relative movement distance), the main valve body 10 contacts the plunger 12. With this, the movement of the main valve body 10 relative to the plunger 12 in the opening direction stops. Then, the plunger 12 and the main valve body 10 move integrally in the opening direction. The plunger 12 and the main valve body 10 are pushed by the fill gas in the opening direction, the plunger 12 contacts the fixed magnetic pole 30, and the plunger 12 and the main valve body 10 are held at this position.

While the main valve body 10 is moving as above, the coupling pin 28 moves relative to the upper inner peripheral surface of the pilot valve body 11 in the lower direction and gets close to the upper inner peripheral surface. However, since the relative movement distance of the main valve body 10 with respect to the plunger 12 in the opening direction is limited by the plunger 12 so as to be equal to or less than the gap A3, and the coupling pin 28 is spaced apart from the upper inner peripheral surface of the pilot valve body 11 by the gap A2 located below the coupling pin 28, the coupling pin 28 does not contact the upper inner peripheral surface of the pilot valve body 11. The coupling pin 28 stops at such a position as to be spaced apart from the upper inner peripheral surface by a gap located below the coupling pin 28, the gap being obtained by subtracting the gap A3 from the gap A2, and is maintained substantially at this position. To be specific, during the filling operation, substantially the gap obtained by subtracting the gap A3 from the gap A2 is always formed between the coupling pin 28 and the upper inner peripheral surface. Therefore, the coupling pin 28 can be prevented from being damaged by the impact generated when the coupling pin 28 contacts the pilot valve body 11 which rapidly moves immediately after the start of the filling operation. In addition, the static shear force is not applied to the coupling pin during the filling operation. At this time, the coupling pin 28 is spaced apart from the upper inner peripheral surface by a gap located above the coupling pin 28, the gap being a sum of the gaps A1 and A3.

As above, the solenoid on-off valve 1 can control the open and close states of the valve port 7 by switching the current supplied to the electromagnetic solenoid. In addition, the solenoid on-off valve 1 can allow the flow of the gas from the supply and discharge passage 5a to the tank space and block the opposite flow. To be specific, a valve having an electromagnetic open-close function and a check valve function can be realized by the solenoid on-off valve 1.

### Manual Opening and Closing of Solenoid On-off Valve

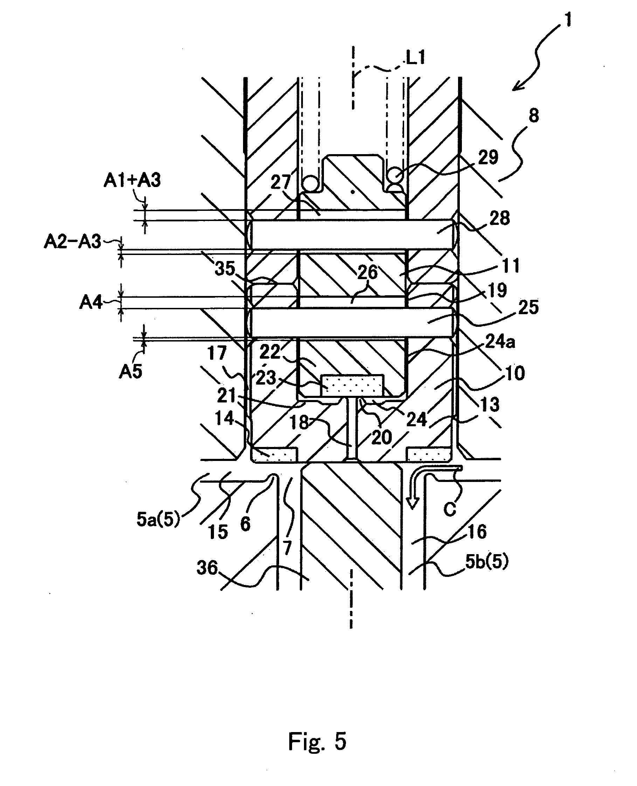

Lastly, a case of manually opening and closing the solenoid on-off valve 1 using the manual operation rod 36 will be explained in reference to Fig. 5. In the closed state, the tip end of the manual operation rod 36 is separated from the lower end of the main valve body 10 as described above. The manual operation rod 36 is caused to move in the upper direction by turning the manual operation rod 36 with the tightening tool. By causing the manual operation rod 36 to move in the upper direction, the tip end of the manual operation rod 36 contacts the main valve body 10, and the main valve body 10 is lifted up by the manual operation rod 36. With this, the main valve body 10 separates from the main valve seat 6, and the valve port 7 opens. Thus, the gas in the high-pressure tank can be discharged through the tank port 3b and the tank space 15 to the supply and discharge passage 5b (see an arrow C in Fig. 5).

By turning the manual operation rod 36 in a direction opposite to the direction in which the manual operation rod 36 is turned when forcibly opening the valve port 7, the manual operation rod 36 moves in the lower direction. By causing the manual operation rod 36 to move in the lower direction after the valve port 7 is forcibly opened by the manual operation rod 36, the main valve body 10 is moved in the closing direction and is then seated on the main valve seat 6. With this, the valve port 7 is closed, and the communication between the tank space 15 and the supply and discharge passage 5b is blocked. Thus, the discharge of the gas in the high-pressure tank can be stopped.

### Other Functions of Solenoid On-off Valve

In the solenoid on-off valve 1, the plastic deformation of the pilot valve seat portion 23 occurs due to aging degradation or use conditions in some cases. If the pilot valve body 11 moves in the closing direction by a distance equal to the gap A6 due to this plastic deformation, the valve main body 22 contacts the stopper portion 21, and the pilot valve body 11 is limited so as not to move in the lower direction any more. The gap A6 is larger than each of the gap A1 and the gap A4. Therefore, even if the plastic deformation of the pilot valve seat portion 23 occurs, the leakage through the pilot passage 18 can be prevented from occurring when the pilot valve body 11 contacts the pilot pin 25 and the coupling pin 28 and the pilot valve seat portion 23 separates from the pilot valve seat 20.

### Embodiment 2

A solenoid on-off valve 1A according to Embodiment 2 of the present invention is similar in configuration to the solenoid on-off valve 1 according to Embodiment 1 of the present invention. Therefore, regarding the configuration of the solenoid on-off valve 1A according to Embodiment 2, only components different from those of the solenoid on-off valve 1 according to Embodiment 1 will be explained. The same reference signs are used for the same components, and a repetition of the same explanation is avoided.

In the solenoid on-off valve 1A, a lower end portion of a plunger 12A is inserted into the valve internal space 19 of the main valve body 10, and the main valve body 10 and the plunger 12A are coupled to each other by the coupling pin 28 so as to be able to move in accordance with each other. In addition, a pilot valve body 11A is accommodated in the plunger 12A and does not get out of the plunger 12A. Hereinafter, the solenoid on-off valve 1A will be explained more specifically.

The plunger 12A is inserted through the guide member 8 so as to be slidable. The plunger 12A includes a plunger main body 41 and a cover member 42. The plunger main body 41 has a substantially columnar shape and extends in the upper-lower direction. The plunger main body 41 includes a large-diameter portion 41 a, a small-diameter portion 41b, and an attachment portion 41c. The large-diameter portion 41a has a substantially columnar shape. An outer diameter of the large-diameter portion 41a is substantially equal to an inner diameter of the guide member 8. The large-diameter portion 41 a is provided in the guide member 8 so as to be slidable in the upper-lower direction. The second spring 34 is interposed between the upper end portion of the large-diameter portion 41a and the fixed magnetic pole 30. The small-diameter portion 41b is formed integrally with a lower end of the large-diameter portion 41a.

The small-diameter portion 41b has a substantially columnar shape. An outer diameter of the small-diameter portion 41b is substantially equal to an inner diameter of the valve internal space 19. The small-diameter portion 41b is inserted through the main valve body 10 so as to be slidable in the upper-lower direction. An upper end of the main valve body 10 through which the small-diameter portion 41b is inserted faces the lower end of the large-diameter portion 41a, and a gap A11 (sixth clearance) is formed between the main valve body 10 and the large-diameter portion 41 a. With this, the relative movement distance of the main valve body 10 with respect to the plunger 12A in the opening direction is limited so as not to be equal to or more than the gap A11. In addition, a communication space 35A having a circular shape is formed between the main valve body 10 and the large-diameter portion 41 a.

A third insertion hole 43 (insertion hole) is formed on the small-diameter portion 41b so as to penetrate the small-diameter portion 41b in the radial direction. The coupling pin 28 is inserted through the third insertion hole 43. Both end portions of the coupling pin 28 extend up to the main valve body 10 and are fixed by the main valve body 10. The coupling pin 28 is provided so as to be spaced apart from an inner peripheral surface, which forms the third insertion hole 43, by a gap A 12 (seventh clearance) located above the coupling pin 28 and a gap A13 located below the coupling pin 28. The gap A12 is larger than the gap A11 (that is, A12>A11). Further, the attachment portion 41c is formed integrally with a lower end of the small-diameter portion 41b.

The attachment portion 41c has a substantially cylindrical shape and is further smaller in diameter than the small-diameter portion 41b. The attachment portion 41c extends in the lower direction from the lower end of the small-diameter portion 41b. The cover member 42 threadedly engages with an outer peripheral surface of the attachment portion 41c. The cover member 42 has a substantially cylindrical shape. An outer diameter of the cover member 42 is substantially equal to that of the small-diameter portion 41b. The gap 24a through which the gas can flow is formed between an outer peripheral surface of the cover member 42 and the inner peripheral surface of the main valve body 10. The gap 24a is connected to the communication space 35A. The cover member 42 includes an inner flange 42a projecting in a radially inner direction. The inner flange 42a is located at a tip end portion (lower end portion) of the cover member 42. The inner flange 42a has a substantially annular shape and is spaced apart from the tip end (lower end) of the attachment portion 41c in the lower direction. A pilot chamber 24A is formed between the inner flange 42a and the bottom portion of the main valve body 10. A valve body accommodating space 44 surrounded by an inner peripheral surface of the cover member 42 is formed between the inner flange 42a and the tip end of the attachment portion 41 c. The pilot valve body 11 A is accommodated in the valve body accommodating space 44.

The pilot valve body 11A includes a seat holding portion 45 and a pilot valve seat portion 23A. The seat holding portion 45 is formed in a substantially cylindrical shape. An outer diameter of the seat holding portion 45 is smaller than an inner diameter of the cover member 42. The pilot valve seat portion 23A is provided in and fixed to the seat holding portion 45. The pilot valve seat portion 23A has a substantially columnar shape. An attachment flange 23a projecting in the radially outer direction is formed along the entire periphery of a middle portion of the pilot valve seat portion 23A in the circumferential direction. The seat holding portion 45 includes a concave portion 45a corresponding to the attachment flange 23a. By fitting the attachment flange 23a in the concave portion 45a, the pilot valve seat portion 23A is attached to the seat holding portion 45 so as not to be detached therefrom. A tip end portion (lower end portion) of the pilot valve seat portion 23A is projecting from the seat holding portion 45.

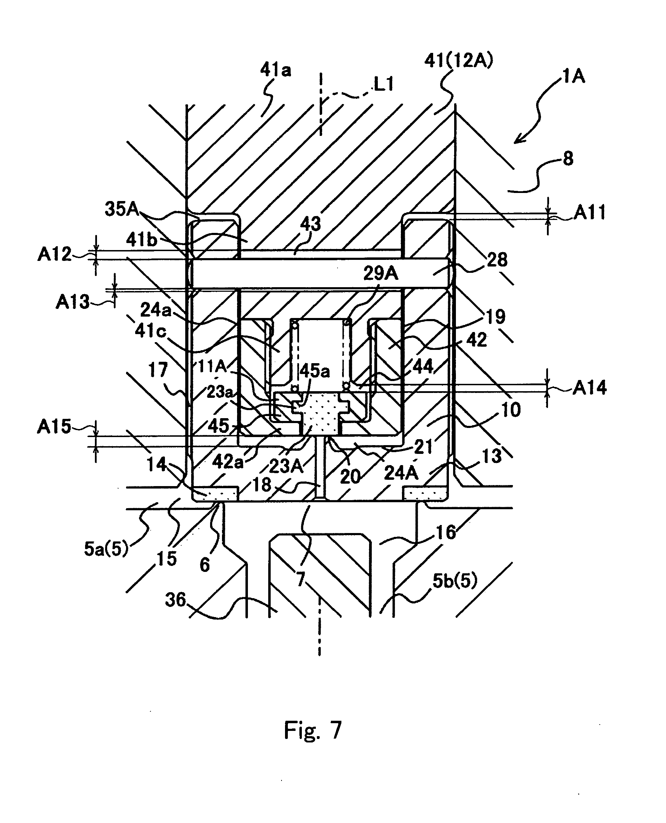

The pilot valve body 11A configured as above is slidable in the upper-lower direction in the valve body accommodating space 44. The seat holding portion 45 of the pilot valve body 11A is formed to be larger in diameter than a radially inner hole of the inner flange 42a of the cover member 42, so that the pilot valve body 11A does not get out of the radially inner hole by the inner flange 42a. Further, the portion (the tip end portion of the pilot valve seat portion 23A) projecting from the seat holding portion 45 of the pilot valve body 11A is inserted through the radially inner hole of the inner flange 42a of the cover member 42 to be exposed in the lower direction. The tip end portion of the pilot valve seat portion 23A faces the pilot valve seat 20 in the upper-lower direction and can be seated on the pilot valve seat 20 (see Fig. 7). The first spring 29A is accommodated in the attachment portion 41c. The first spring 29A biases the pilot valve body 11A in the lower direction. The biased pilot valve body 11A is supported by the inner flange 42a, is spaced apart from the attachment portion 41c in the lower direction by a gap A14, and is seated on the pilot valve seat 20 in the closed state. With this, the pilot passage 18 is being closed. The gap A 14 is larger than the gap A11 (to be specific, A14>A11).

### Opening Operation of Solenoid On-off Valve

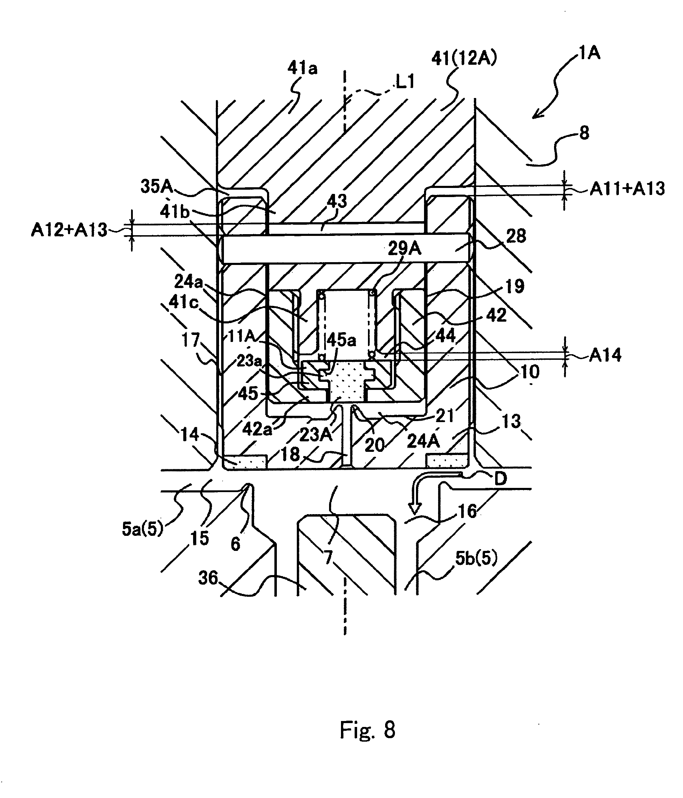

Hereinafter, a case of opening the solenoid on-off valve 1A in the closed state will be explained in reference to Fig. 8. When the current is supplied to the electromagnetic solenoid 31, the plunger 12A is suctioned toward the fixed magnetic pole 30, and the plunger 12A moves in the opening direction. At this time, the pilot valve body 11A is supported by the inner flange 42a and lifted up in the opening direction. Meanwhile, since the inner peripheral surface of the plunger 12A and the coupling pin 28 are spaced apart from each other by the gap A13, the main valve body 10 remains at the valve port close position. Therefore, the pilot valve body 11A moves relative to the main valve body 10 in the opening direction and separates from the pilot valve seat 20 (passage open position). Thus, the pilot passage 18 opens.

When the pilot passage 18 opens, the tank space 15 and the supply and discharge passage 5b are connected to each other through the communication groove 17, the communication space 35A, the gap 24a, the pilot chamber 24A, and the pilot passage 18, and the internal pressure of the supply and discharge passage 5b increases. With this, the pressure difference between the tank space 15 and the supply and discharge passage 5b decreases, and the acting force necessary to cause the main valve body 10 to move in the opening direction can be reduced. To be specific, the exciting force applied to the plunger 12A can be reduced, and the electromagnetic solenoid 31 can be reduced in size.

When the supply of the current to the electromagnetic solenoid 31 is continued even after the pilot passage 18 is opened, the plunger 12A is continued to be lifted up. Then, the inner peripheral surface of the plunger 12A contacts the coupling pin 28, and the main valve body 10 is lifted up by the coupling pin 28. With this, the main valve body 10 moves in the opening direction and separates from the main valve seat 6 (valve port open position). Thus, the valve port 7 opens, and the gas in the high-pressure tank directly flows from the tank space 15 to the supply and discharge passage 5b (see an arrow D in Fig. 7). At this time, the coupling pin 28 is spaced apart from the inner peripheral surface of the plunger 12 by a gap located below the coupling pin 28, the gap being the sum of the gaps A12 and A13. A gap between the main valve body 10 and the large-diameter portion 41 a is equal to the sum of the gaps A11 and A 13.

### Closing Operation of Solenoid On-off Valve

When the supply of the current to the electromagnetic solenoid 31 is stopped in the open state, the plunger 12A moves in the lower direction (closing direction) by the biasing force of the second spring 34. With this, the pilot valve body 11A also moves in the closing direction, and the pilot valve body 11A is then seated on the pilot valve seat 20 to close the pilot passage 18. After the pilot valve body 11A is seated on the pilot valve seat 20, the main valve body 10 is pressed in the closing direction by the pilot valve body 11A to move in the closing direction. Then, the main valve body 10 is seated on the main valve seat 6 to close the valve port 7. Thus, the solenoid on-off valve 1A is set to the closed state (see Fig. 7).

### Filling Operation of Solenoid On-off Valve

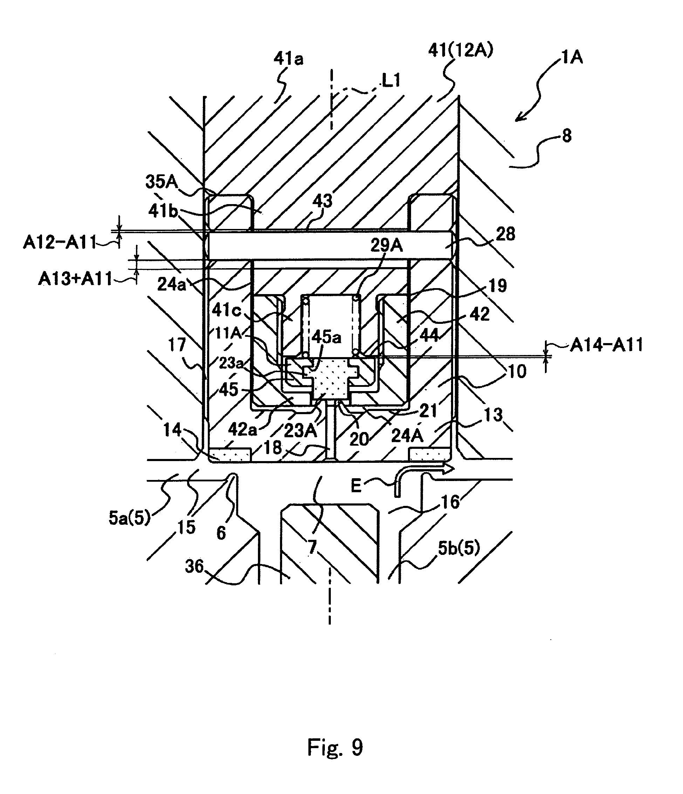

Next, a case of filling the high-pressure tank with the gas will be explained in reference to Fig. 9. When the fill gas is supplied from the supply and discharge port 3c to the supply and discharge passage 5b, the main valve body 10 moves in the opening direction by the acting force of the fill gas and separates from the main valve seat 6. With this, the valve port 7 opens, and the fill gas in the supply and discharge passage 5b is introduced through the valve port 7, the tank space 15, and the tank port 3b to the high-pressure tank (see an arrow E in Fig. 9). Thus, the high-pressure tank is filled with the gas.

Meanwhile, even after the valve port 7 opens, the main valve body 10 moves in the opening direction. At this time, the pilot valve body 11A receives the acting force of the fill gas flowing through the pilot passage 18 to be slightly lifted up from the pilot valve seat 20. However, the pressure receiving area of the main valve body 10 is larger than that of the pilot valve body 11A, the pressure receiving area being an area which receives the acting force of the fill gas. Therefore, the pilot valve body 11A is maintained so as to be mostly in close contact with the pilot valve seat 20. The pilot valve body 11A is biased by the first spring 29A in a state where the pilot valve body 11A is spaced apart from the lower end of the attachment portion 41 c of the plunger 12A by a gap obtained by subtracting the gap A11 from the gap A14. Therefore, a force of the main valve body 10 pressing the pilot valve body 11A can be absorbed by the first spring 29A. To be specific, a force of the pilot valve seat 20 pressing the pilot valve seat portion 23 can be suppressed. Thus, the gas leakage in the closed state can be prevented from occurring by largely deforming or damaging the pilot valve seat portion 23 by the filling operation of the gas. With this, the solenoid on-off valve 1A having higher reliability can be provided.

Further, when the main valve body 10 moves in the opening direction, the main valve body 10 contacts the large-diameter portion 41a. With this, the movement of the main valve body 10 relative to the plunger 12A stops. Then, the plunger 12A and the main valve body 10 move integrally in the opening direction. The plunger 12A and the main valve body 10 are pushed by the fill gas in the opening direction, the plunger 12A contacts the fixed magnetic pole 30, and the plunger 12A and the main valve body 10 are held at this position.

While the main valve body 10 is moving as above, the coupling pin 28 moves relative to the inner peripheral surface of the plunger 12A in the upper direction and gets close to the inner peripheral surface. However, the main valve body 10 then contacts the plunger 12A, and the movement thereof stops. With this, the movement of the coupling pin 28 also stops. Therefore, the coupling pin 28 does not contact the inner peripheral surface of the plunger 12A. The coupling pin 28 stops at such a position as to be spaced apart from the inner peripheral surface by a gap located above the coupling pin 28, the gap being obtained by subtracting the gap A11 from the gap A12, and is maintained substantially at the position. To be specific, during the filling operation, substantially the gap obtained by subtracting the gap A11 from the gap A12 is always formed between the coupling pin 28 and the inner peripheral surface. Therefore, the coupling pin 28 can be prevented from being damaged by the impact generated when the coupling pin 28 contacts the plunger 12A which rapidly moves immediately after the start of the filling operation. In addition, the static shear force is not applied to the coupling pin during the filling operation.

Since the attachment portion 41c of the plunger main body 41 and the pilot valve body 11A are spaced apart from each other by the gap A14, and the gap A14 is larger than the gap A11, the pilot valve body 11A does not contact the attachment portion 4 1 c. On this account, the pilot valve body 11A and the plunger 12A can be prevented from being damaged. At this time, the coupling pin 28 is spaced apart from the inner peripheral surface of the plunger 12A by a gap located below the coupling pin, the gap being the sum of the gaps A11 and A 13.

### Manual Opening and Closing of Solenoid On-off Valve

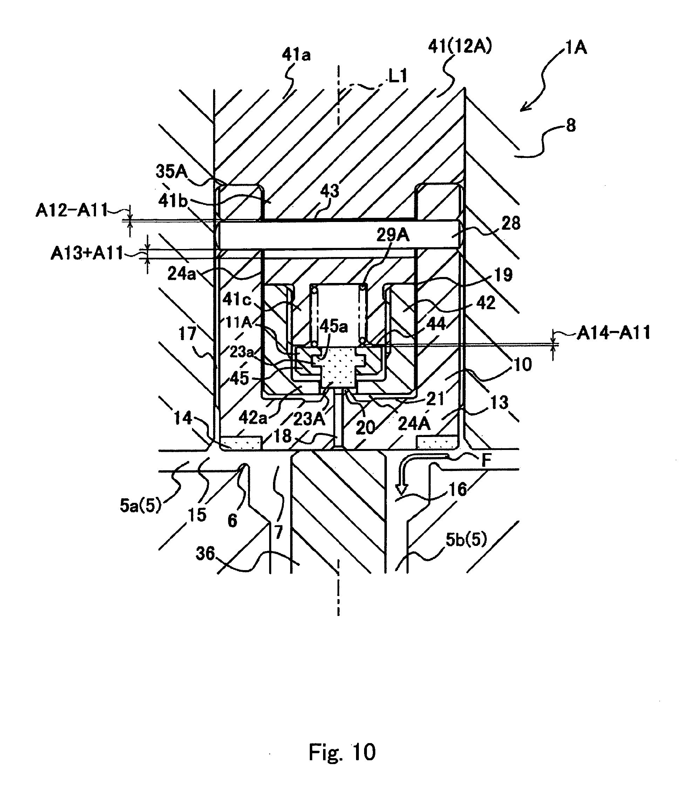

Lastly, a case of manually opening and closing the solenoid on-off valve 1A using the manual operation rod 36 will be explained in reference to Fig. 10. In the closed state, the tip end of the manual operation rod 36 is separated from the lower end of the main valve body 10. The manual operation rod 36 is caused to move in the upper direction by turning the manual operation rod 36 with the tightening tool. By causing the manual operation rod 36 to move in the upper direction, the tip end of the manual operation rod 36 contacts the main valve body 10, and the main valve body 10 is lifted up by the manual operation rod 36. With this, the main valve body 10 separates from the main valve seat 6, and the valve port 7 opens. Thus, the gas in the high-pressure tank can be discharged through the tank port 3b and the tank space 15 to the supply and discharge passage 5b (see an arrow F in Fig. 10).

By turning the manual operation rod 36 in a direction opposite to the direction in which the manual operation rod 36 is turned when forcibly opening the valve port 7, the manual operation rod 36 moves in the lower direction. By causing the manual operation rod 36 to move in the lower direction after the valve port 7 is forcibly opened by the manual operation rod 36, the main valve body 10 is moved in the closing direction and is then seated on the main valve seat 6. With this, the valve port 7 is closed, and the communication between the tank space 15 and the supply and discharge passage 5b is blocked. Thus, the discharge of the gas in the high-pressure tank can be stopped.

### Other Functions of Solenoid On-off Valve

In the solenoid on-off valve 1A, if the plastic deformation of the pilot valve seat portion 23A occurs due to aging degradation or use conditions, the plunger 12A moves in the closing direction. As with Embodiment 1, the main valve body 10 includes the stopper portion 21. If the plunger 12A moves in the closing direction by a distance A15, the plunger 12A contacts the stopper portion 21 and does not move in the lower direction any more. The gap A15 is smaller than the gap A12. Therefore, even if the plastic deformation of the pilot valve seat portion 23A occurs, the leakage through the pilot passage 18 can be prevented from occurring when the plunger 12A contacts the coupling pin 28 and the pilot valve seat portion 23A separates from the pilot valve seat 20.

In the solenoid on-off valve 1A of Embodiment 2, the number of pins is smaller than that in the solenoid on-off valve 1 of Embodiment 1. Therefore, the number of members which may break or be damaged can be reduced, and the reliability can be further improved.

In addition, the same operational advantages as Embodiment 1 can be obtained herein.

### Other Embodiment

According to the solenoid on-off valve 1 of Embodiment 1, the pilot pin 25 and the coupling pin 28 are displaceable relative to the pilot valve body 11. However, the pilot pin 25 and the coupling pin 28 may be fitted in the pilot valve body 11 so as not to be displaceable relative to the pilot valve body 11. In this case, a hole, such as the first insertion hole 26, is formed on the main valve body 10 and a hole, such as the second insertion hole 2, is formed on the plunger 12 such that the pilot pin 25 and the coupling pin 28 are displaceable relative to the main valve body 10 and the plunger 12. With this, the same operational advantages as the solenoid on-off valve 1 of Embodiment 1 can be obtained herein.

According to the solenoid on-off valve 1A of Embodiment 2, the coupling pin 28 is provided so as to be displaceable relative to the plunger 12A. However, the coupling pin 28 may be fitted in the plunger 12A so as not to be displaceable relative to the plunger 12A. In this case, a hole, such as the third insertion hole 26, is formed on the main valve body 10 such that the coupling pin 28 is displaceable relative to the main valve body 10. With this, the same operational advantages as the solenoid on-off valve 1A of Embodiment 2 can be obtained herein.

Embodiments 1 and 2 have explained the solenoid on-off valves 1 and 1A (to be specific, container main valves) that are on-tank type valves. However, the solenoid on-off valves 1 and 1A may be in-tank type solenoid on-off valves or may be solenoid on-off valves, each of which is not mounted on the opening of the high-pressure tank. To be specific, each of the solenoid on-off valves 1 and 1A may be any valve as long as the valve is provided on a passage connecting the gas consuming unit and the high-pressure tank.

### Industrial Applicability

The present invention is applicable to a solenoid on-off valve capable of switching between the discharge and non-discharge of the gas from the tank by the electromagnetic solenoid and filling the tank with the gas.

### Reference Signs List

1, 1A solenoid on-off valve
2 housing
3b tank port
3c supply and discharge port
5b supply and discharge passage
7 valve port
10 main valve body
11, 11A pilot valve body
12, 12A plunger
15 tank space
18 pilot passage
22 valve main body
23, 23A pilot valve seat portion
25 pilot pin
26 first insertion hole
27 second insertion hole
28 coupling pin
29, 29A first spring
31 electromagnetic solenoid
34 second spring
41 plunger main body
43 third insertion hole
45 seat holding portion

## Claims

1. A solenoid on-off valve comprising:
a housing including a tank space connected to a tank port, a supply and discharge space connected to a supply and discharge port, and a valve port connecting the tank space and the supply and discharge space;
a main valve body configured to move between a valve port close position where the main valve body closes the valve port and a valve port open position where the main valve body opens the valve port and including a pilot passage connected to the tank space and the supply and discharge space;
a pilot valve body configured to move between a passage close position where the pilot valve body is seated on the main valve body to close the pilot passage and a passage open position where the pilot valve body separates from the main valve body to open the pilot passage;
a plunger configured to be movable in an opening direction and cause the pilot valve body and the main valve body to move to the passage open position and the valve port open position in this order when the plunger moves in the opening direction;
an electromagnetic solenoid configured to generate an exciting force to cause the plunger to move in the opening direction;
a plunger biasing unit configured to bias the plunger in a closing direction against the exciting force of the electromagnetic solenoid; and
a coupling pin inserted through two members that are the plunger and the pilot valve body or two members that are the plunger and the main valve body and configured to couple the two members such that the two members are able to move in accordance with each other and are displaceable relative to each other, wherein
when the main valve body is pushed in the opening direction, a movement of the main valve body relative to the plunger in the opening direction is stopped such that the coupling pin does not contact the two members.

2. The solenoid on-off valve according to claim 1, wherein:
the coupling pin couples the plunger with the pilot valve body;
the plunger is provided to be spaced apart from the main valve body by a first clearance when the main valve body is located at the valve port close position;
the pilot valve body includes a plunger insertion hole;
the coupling pin is fixed to the plunger, is inserted through the plunger insertion hole so as to be movable, and is provided to be spaced apart from a surface, which forms the plunger insertion hole, in the opening direction by a second clearance when the main valve body is located at the valve port close position; and
the second clearance is larger than the first clearance.

3. The solenoid on-off valve according to claim 2, wherein:
the pilot valve body and the main valve body are coupled to each other by the pilot pin so as to be movable in accordance with each other, the pilot pin being inserted through the pilot valve body and the main valve body; and
the pilot pin is provided so as not to contact the pilot valve body or the main valve body when the main valve body is pushed in the opening direction.

4. The solenoid on-off valve according to claim 3, wherein:
the pilot valve body includes a valve main body which is inserted into the main valve body so as to be movable and a pilot valve seat portion which is provided on the valve main body and is seated on the main valve body to close the pilot passage;
the pilot valve main body is accommodated so as to be spaced apart from the main valve body in the opening direction by a third clearance;
the coupling pin is provided to be spaced apart from the surface, which forms the plunger insertion hole, in the closing direction by a fourth clearance when the pilot valve main body is located at the passage close position;
the pilot valve main body further includes a main valve insertion hole;
the pilot pin is fixed to the main valve body, is inserted through the main valve insertion hole so as to be movable, and is provided to be spaced apart from a surface, which forms the main valve insertion hole, in the closing direction by a fifth clearance when the pilot valve body is located at the passage close position; and
each of the fourth clearance and the fifth clearance is larger than the third clearance.

5. The solenoid on-off valve according to claim 1, wherein:
the coupling pin couples the plunger with the main valve body;
the plunger is provided to be spaced apart from the main valve body by a sixth clearance when the main valve body is located at the valve port close position;
the plunger includes an insertion hole;
the coupling pin is fixed to the main valve body, is inserted through the insertion hole so as to be movable, and is provided to be spaced apart from a surface, which forms the insertion hole, in the closing direction by a seventh clearance when the main valve body is located at the valve port close position; and
the seventh clearance is larger than the sixth clearance.

6. The solenoid on-off valve according to claim 5, wherein:
the plunger includes a plunger main body and a cover member;
the plunger main body includes an attachment portion located in the opening direction;
a cover member threadedly engages with the attachment portion;
a valve space closed by the attachment portion is formed in the cover member; and
the pilot valve body contacts and is supported by the cover member in the valve space and is provided so as to be movable from a state where the pilot valve body contacts and is supported by the cover member.

7. The solenoid on-off valve according to claim 6, wherein:
the pilot valve body is provided to be spaced apart from an end surface of the attachment portion by an eighth clearance when the pilot valve body is located at the passage close position; and
the eighth clearance is larger than the sixth clearance.

8. The solenoid on-off valve according to any one of claims 1 to 7, further comprising a valve body biasing unit configured to bias the pilot valve body in the closing direction.
